# EUROPEAN PATENT SPECIFICATION

(11) **EP 3 269 114 B1**
(45) Date of publication and mention of the grant of the patent: **13.03.2019**
(21) Application number: 16718592.5
(22) Date of filing: 13.04.2016
(51) Int. Cl.: H04L 29/06

(54) **MANAGING THE PLACEMENT OF AN OUTGOING CALL**
VERWALTUNG DER PLATZIERUNG EINES AUSGEHENDEN ANRUFES
GESTION DE LA RÉALISATION D'UN APPEL SORTANT

(30) Priority: 17.04.2015 US 201514689928
(43) Date of publication of application: 17.01.2018
(73) Proprietor: Microsoft Technology Licensing, LLC, Redmond, Washington 98052-6399 (US)
(72) Inventor: CINAR, Onur, Redmond, Washington 98052-6399 (US); CHANDRASEKARAN, Vijay, Redmond, Washington 98052-6399 (US); CHASTNEY, Daniel James, Redmond, Washington 98052-6399 (US)
(74) Representative: Townsend, Martyn
(86) International application number: PCT/US2016/027170
(87) International publication number: WO 2016/168215

(56) References cited:
- WO-A1-2014/123992
- US-A1- 2007 263 605
- US-A1- 2015 049 158

## Description

### BACKGROUND

Some communication systems allow the user of a device, such as a personal computer, to conduct voice or video calls over a packet-based computer network such as the Internet as well as conventional circuit switched networks such as GSM and PSTN communication networks. Such communication systems include voice or video over internet protocol (VoIP) systems. These VoIP systems are beneficial to the user as they are often of significantly lower cost to use than the conventional fixed line (PSTN) or mobile cellular (GSM) networks. This may particularly be the case for long-distance communication. To use a VoIP system, the user installs and executes client software on their device. The client software sets up the VoIP connections as well as providing other functions such as registration and authentication. In addition to voice communication, the client may also set up connections for other communication media such as instant messaging ("IM"), SMS messaging, file transfer and voicemail.

With increasing mobile bandwidths, there is increasing interest in providing packet-based voice and video calls via client applications running on user terminals such as Internet-enabled mobile phones. These user terminals comprise network interfaces 224 such as short-range RF transceivers operating on one or more unlicensed bands for accessing the Internet via wireless access points (e.g. of Wi-Fi access points of WLAN networks), and/or cellular transceivers operating on one or more licensed bands for accessing the Internet via a packet-based service of a cellular network such as GPRS (General Packet Radio Service) or HSPA (High Speed Packet Access).

WO 2014/123992 relates to a smart Voice Over LTE (VoLTE) application for allowing a wireless mobile device select an appropriate access technology for establishing a voice call with a target mobile device, based on the capabilities of the target mobile device. If the target mobile device is only configured for legacy circuit switched network calls, the wireless mobile device need not begin the call connection on the VoLTE network and instead may establish the call on the circuit switched network from the beginning.

### SUMMARY

This summary is provided to introduce a selection of concepts in a simplified form that are further described below in the detailed description. This summary is not intended to identify key features or essential features of the claimed subject matter, nor is it intended to be used to limit the scope of the claimed subject matter. Nor is the claimed subject matter limited to implementations that solve any or all of the disadvantages noted in the background section.

Embodiments of the present disclosure relate to management of communication events between first and second user terminals. In particular embodiments of the present disclosure relate to management of communication events using a communication client application (or communication client app). 'Using' a communication client application the user may dial a number to place an outgoing call. The call may be placed from the communication client app, or alternatively using the native communication client app. The communication client app in such embodiments subscribes to call and dial events. When a number is dialled, or called, the communication client app checks to determine if the dialled number is flagged as a communication client user. This may be checked against a remote database, if querying for the first time, or against a local cache. In one embodiment the user is provided with the option to wait until the check is made before placing the call. If the number is flagged as one associated with a communication client user the call is placed using the communication client app. If it is not determined that the number is flagged as a communication client user, another application is used to initiate the call. In an embodiment the other application is the native communication client application. In one embodiment the communication client app identifies the correct calling component of the other communication client app in advance of the user initiating the call by attempting to place a call upon installation of the communication client app.

The inventors have recognised managing the communication events in such a manner may be significant, especially for user terminals with limitations with respect to network connectivity and processor power consumption.

In one aspect there is a user terminal associated with a first user, the user terminal comprising a communication client application for managing and performing communications with at least one further user terminal over a first network, the communication client application being configured to: determine information associated with at least one further communication client application installed on the user terminal by generating a dummy call URI, passing the dummy call URI to a user terminal operating system and receiving from the user terminal operating system native communication client component information identifying the at least one further communication client application, the at least one further communication client application being for managing and performing communications with the at least one further user over a second network; determine with respect to at least one outgoing call whether a further user terminal at the call end point comprises the communication client application; and manage and perform the placement of the call based on the determination of whether the further user terminal at the call end point comprises the communication client application, such that the communication client application is configured to manage and perform the placement of the call using the communication client application over the first network when the further user terminal at the call end point comprises the communication client application and hand off the placement of the call to the identified at least one further communication client application otherwise by generating a call URI comprising the native communication client component information identifying the at least one further communication client application; wherein the communication client application is configured to determine with respect to the at least one outgoing call whether the further user terminal at the call end point comprises the communication client application by: receiving an outgoing call event notification, the outgoing call event notification comprising an identifier identifying a user of the at least one further user terminal; generating a search request comprising the identifier for a communication client application database; and receiving a response to the search request determining whether the at least one further user terminal at the call end point comprises the communication client application.

[Deleted].

According to a second aspect there is a method for managing communications between user terminals over a first network, the method comprising: determining information associated with at least one further communication client application installed on the user terminal for managing communications with the at least one further user over a second network by generating a dummy call URI, passing the dummy call URI to a user terminal operating system and receiving from the user terminal operating system native communication client component information identifying the at least one further communication client application; determining with respect to at least one outgoing call whether a user terminal at the call end point comprises the communication client application; and managing the placement of the call based on the determination of whether the user terminal at the call end point comprises the communication client application, such that the communication client application manages the placement of the call using the communication client application over the first network when the further user terminal at the call end point comprises the communication client applicaiton and hands off the placement of the call to the at least one further communication client application otherwise by generating a call URI comprising the native communication client component information identifying the at least one further communication client application; wherein the communication client application is configured to determine with respect to the at least one outgoing call whether the further user terminal at the call end point comprises the communication client application by: receiving an outgoing call event notification, the outgoing call event notification comprising an identifier identifying a user of the at least one further user terminal; generating a search request comprising the identifier for a communication client application database; and receiving a response to the search request determining whether the at least one further user terminal at the call end point comprises the communication client application.

### BRIEF DESCRIPTION OF THE DRAWINGS

For a better understanding of the present disclosure and to show how it may be put into effect, reference is now made by way of example to the accompanying drawings in which:
Figure 1 is a schematic representation of a communication system,
Figure 2 is a schematic block diagram of a mobile terminal,
Figure 3 is an example flow diagram of a communication client component determination operation,
Figure 4 is an example flow diagram of a communication client 'dial out' operation,
Figure 5 is an example flow diagram of a further communication client 'dial out' operation incorporating a cache lookup operation,
Figure 6 is an example flow diagram of a non-communication client 'dial out' operation branch,
Figure 7 is an example flow diagram of a communication client 'dial out' operation branch,
Figure 8a is an example flow diagram of a delayed communication client 'dial out' operation branch,
Figure 8b is a further example flow diagram of a delayed communication client 'dial out' operation branch,
Figure 9 is an example invite UI message.

### DETAILED DESCRIPTION

Embodiments of the present disclosure are described by way of example only.

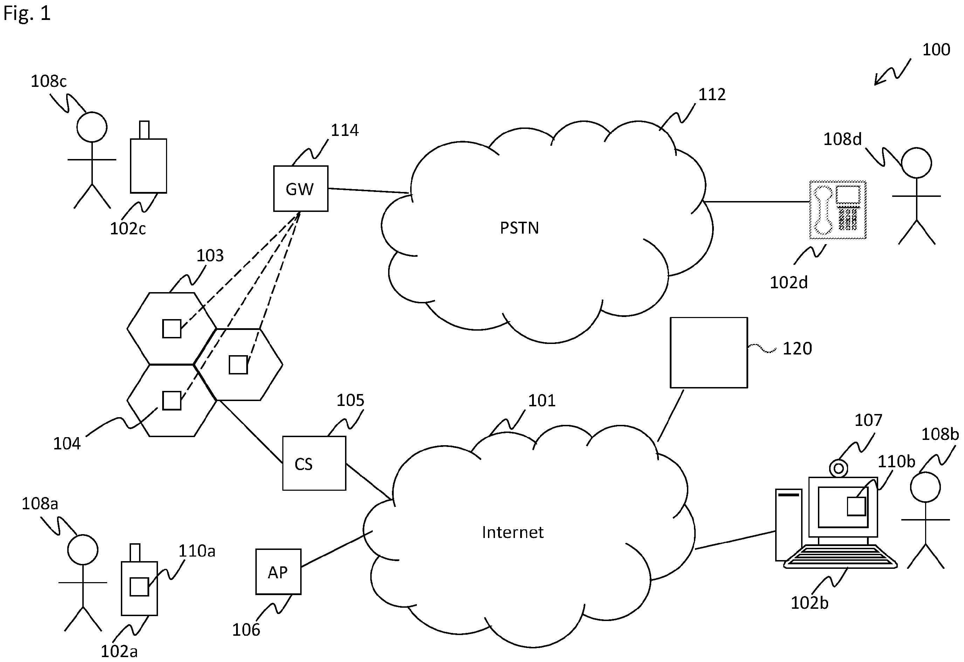

Figure 1 is a schematic illustration of a communication system 100 comprising a packet-based network 101 such as the Internet, a mobile cellular network 103, and a circuit switched network 112 such as the public switched telephone network (PSTN). The mobile cellular network 103 comprises a plurality of base stations 104 (sometimes referred to as node Bs in 3GPP terminology). Each base station 104 is arranged to serve a corresponding cell of the cellular network 103. Each base station 104 is connected to the circuit switched network 112 via a gateway 114. Further, the packet-switched network 101 comprises a plurality of wireless access points 106 such as Wi-Fi access points for accessing the Internet. These may be the access points of one or more wireless local area networks (WLANs).

A plurality of user terminals 102 are arranged to communicate over one or more of the networks 101,103,112. For merely illustration purposes only, Figure 1 shows user terminal 102a as an Internet-enabled mobile device, user terminal 102b as a desktop or laptop PC, user terminal 102c as a cellular mobile phone 102c, and user terminal 102d as a landline telephone connected to the circuit switched network 112.

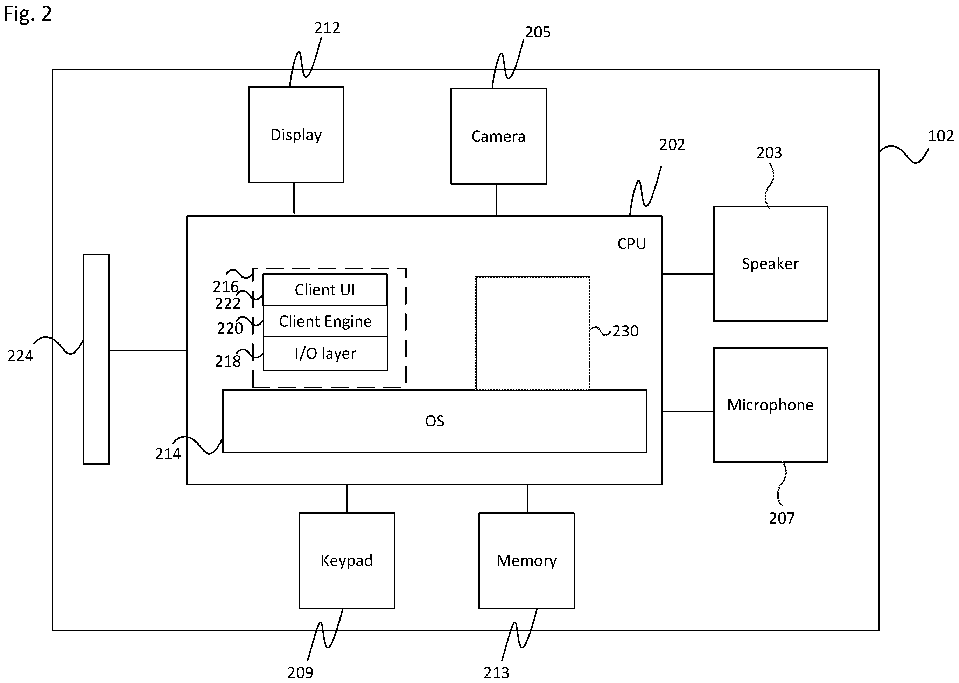

An example user terminal 102a is shown schematically in Figure 2. The user terminal 102a may be one of an Internet-enabled mobile telephone; a handheld game console; a personal digital assistant (PDA); a tablet computer; or a laptop computer.

The user terminal 102a comprises a processing apparatus in the form of one or more processor units (CPUs) 202 coupled to a memory 213 storing a communication client application (or communication client app). The processor 202 is also coupled to: a microphone 207, a speaker 203, camera 205, one or more network interfaces 224, a keypad 209, and a display 212.

In the example shown in Figure 2, the microphone 207, speaker 203, camera 205, keypad 209, and display 212 are examples of suitable user interface inputs and outputs. In some embodiments the user interface input may be a keyboard, mouse, pointing device, touchpad or any suitable user interface input device, for example gesture or motion control user input, head-tracking or eye-tracking user input, a 'touch' or 'proximity' detecting input configured to determine the proximity of the user to the display 212 (in other words a touch or hover touch interface).

The one or more network interfaces 224 enable the user terminal 102a to access the one or more networks 101,103,112. For example, user terminal 102a may comprise a cellular wireless transceiver for accessing the mobile cellular network 103 via the base stations 104, and/or a wired or wireless modem for accessing the Internet 101. In the case of a wireless modem, this typically comprises a short-range wireless transceiver (e.g. Wi-Fi) for accessing the Internet 101 via the wireless access points 106.

Access to the Internet 101 may also be achieved by other means such as GPRS (General Packet Radio Service) or HSPA (High Speed Packet Access). At a higher level of the cellular hierarchy, the cellular network 103 comprises a plurality of cellular controller stations 105 each coupled to a plurality of the base stations 104. The controller stations 105 are coupled to a traditional circuit-switched portion of the mobile cellular network 103 but also to the Internet 101. The controller stations 105 are thus arranged to allow access to packet-based communications via the base stations 104, including access to the Internet 101. The controller stations 105 may be referred to for example as Base Station Controllers (BSCs) in GSM/EDGE terminology or Radio Network Controllers (RNCs) in USTM or HSPA terminology.

The memory 213 may comprise a non-volatile memory such as an electronic erasable and programmable memory (EEPROM, or "flash" memory) coupled to the processor 202. The memory stores communications code arranged to be executed on the processor, and configured so as when executed to engage in communications over one or more networks 101,103,112. The communications code preferably comprises a communication client application 110a provided by a software provider associated with the communication system. The communication client application 110a may be executed for performing communications such as voice or video calls with other user terminals 102 over the Internet 101, via a network interface 224 and wireless access points 106, and/or via the network interface 224, base stations 104 and controller stations 105 of the cellular network 103 as discussed above. However, one or more of the user terminals 102 involved could alternatively communicate via the network interface 224 and a wired modem, e.g. in the case of a call between a mobile terminal and a desktop PC

The CPU 202 is connected to the network interface 224 such as a modem for communication with the communication networks. The network interface 224 may be integrated into the user terminal 102 as shown in Figure 2. In alternative user terminals the network interface 224 is not integrated into the user terminal 102. The network interface 224 may comprise a short-range wireless transceiver for communication to the wireless access points or a cellular transceiver for communication to the base stations.

As shown in Figure 1 both user terminals 102a and 102b execute communication client application software 110 in order for the user terminals 102a and 102b to transmit and receive data over the Internet 101. In other words the communication client application may be used to initiate packet based communication with another communication client application associated with the same communication network (for example an overlay network and distinct from the communication system 100). The communication client application may for example be configured to transmit and receive data associated with a defined communication protocol to define the 'network. For example the communication client application may be configured to communicate with other communication client applications executed on further user terminals using a Voice over Internet Protocol (VoIP) protocol. It is understood that in some embodiments a user terminal comprises some other client communication software, for example client communication software able to communicate over only one of the communication networks. The communication client application 110 may be downloaded and installed from a remote server. Furthermore in some embodiments the communication client application 110 when first installed or executed may be configured to contact and register the installation or execution of the communication client application at a communication client application database. The communication client application database may comprise parts which are locally cached on the user terminal 102, or remote from the user terminal (for example on a server or over a distributed computing system).

Figure 2 also illustrates an operating system ("OS") 214 executed on the CPU 202. Running on top of the OS 214 is a software stack 216 for the communication client application (CCA) 110a. The software stack shows a client protocol layer 218, a client engine layer 220 and a client user interface layer ("UI") 222. Each layer is responsible for specific functions. Because each layer usually communicates with two other layers, they are regarded as being arranged in a stack as shown in Figure 2. The operating system 214 manages the hardware resources of the device 102a and handles the transmission and receipt of data via the network interface 207. The client protocol layer 218 of the communication client app communicates with the operating system 214 and manages the connections over the communication system. Processes requiring higher level processing are passed to the client engine layer 220. The client engine 220 also communicates with the client user interface layer 222. The client engine 220 may be arranged to control the client user interface layer 222 to present information to the user 108a via the user interface of the client and to receive information from the user 108a via the user interface.

Also shown in Figure 2 is a further communication client application 230. The further communication client may be a native communication client (the communication client provided with the device from the factory. The further communication client may thus be executed for performing communications such as voice or video calls with other user terminals 102 over the network interface 224, base stations 104 and controller stations 105 of the cellular network 103 as discussed above.

The following examples describe the use of a communication client application 110 in order to control the setting up and communicating of a call following the user dialling a number to place an outgoing call.

Although the communication client application may be able to make or place a call using the communication client application, there may be situations where this is not possible. For example where the other user terminal is not equipped with the communication client application and is only equipped with the native communication client or with another communication client then the communication client application may be required to hand off the call making process to the native communication client or another communication client. However in order to achieve this the communication client application 110 may determine which other communication client components 230 are installed on the user terminal 102.

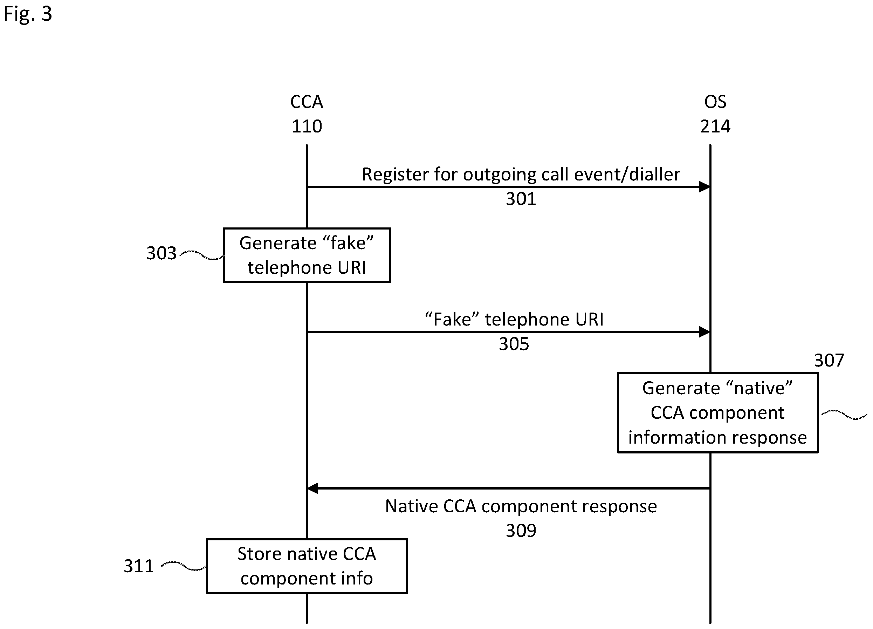

With respect to Figure 3 a flow diagram of a communication client component determination operation is shown. The communication client application may be configured to generate and transmit a register message to the operating system 214 registering the communication client application at the operating system 214. This may for example comprise the communication client application 110 generating and transmitting a register message to the operating system 214 registering the communication client application for outgoing call notifications.

The operation of registering the communication client application (and for outgoing call event notification) is shown in Figure 3 by step 301.

Furthermore the communication client application 110 can be configured to generate a dummy telephone call URI.

An example of a dummy call URI is "tel:"
The operation of the generating the dummy telephone call URI is shown in Figure 3 by step 303.

The dummy telephone call URI may then be passed to the operating system 214.

The operation of forwarding the dummy telephone call URI from the communication client application 110 to the operating system 214 is shown in Figure 3 by step 305.

The operating system 214 having received the dummy telephone call URI can then be configured to generate information on the other and native communication client components which have been installed (and registered) on the device in response to the dummy telephone call URI

The operation of generating the other and native communication client application component information response is shown in Figure 3 by step 307.

The OS 214 having generated the response may be configured to transmit the information back to the communication client which originated the dummy call URI message.

The operation of transmitting the communication client component information back to the communication client application is shown in Figure 3 by step 309.

The communication client application may then be configured to store the other and native communication client application component information.

The operation of storing the (native and further) communication client application component information is shown in Figure 3 by step 311.

The communication client having registered itself (for outgoing call events) and having determined any further (such as the native communication client component information) may then be manage outgoing call events according to the following examples.

Thus for example when a number is dialled, or called, the communication client application may be configured to check or determine if the dialled number is flagged as also being a communication client user (in other words whether the number being called is currently associated with apparatus or a device which is executing the communication client application).

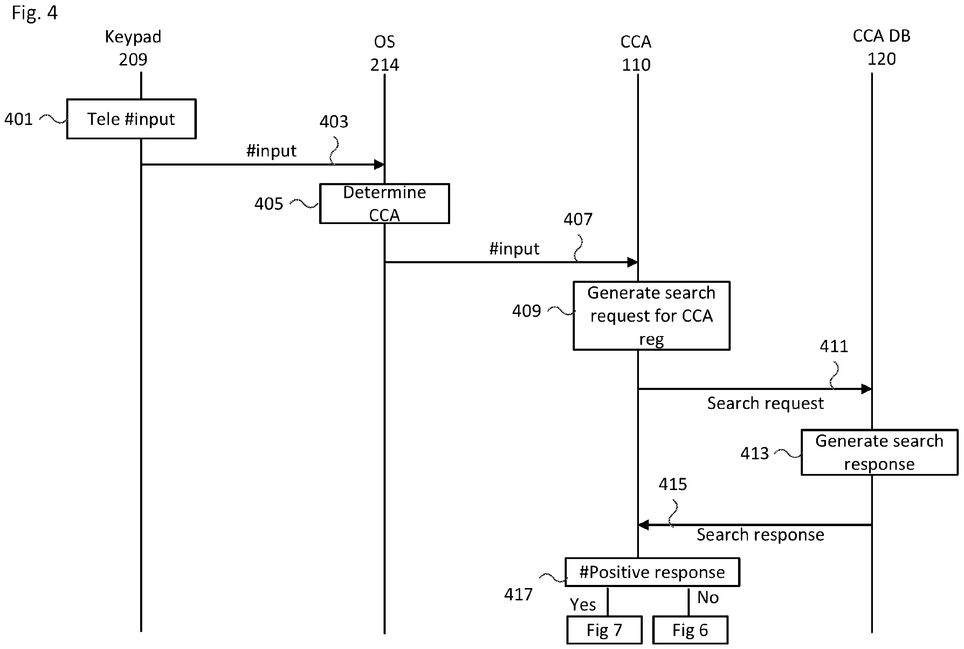

The operations of determining whether an outgoing call event may be managed by the communication client application (in other words can the call be placed by the communication client application) is shown with respect to Figure 4.

In the example shown herein the keypad 209 (as an example of an input UI) may input a telephone number to be called. It is understood that the input may be any suitable input such as touch screen, gesture, voice etc.

The operation of inputting a telephone number is shown in Figure 4 by step 401.

This telephone number (or number or # input) can be passed to the operating system (OS) 214.

The operation of passing the number input from the keypad 209 to the operating system 214 is shown in Figure 4 by step 403.

The OS 214 may then be configured to use the registered communication client information to determine that the communication client application 110 is to receive the number input.

The operation of determining the communication client to receive the number input is shown in Figure 4 by step 405.

The OS 214 may then forward the number input to the communication client application 110.

The operation of forwarding the number input to the communication client application is shown in Figure 4 by step 407.

The communication client application 110, having received the number input, can then generate a search request for a communication client database (communication client application DB) to determine whether the number being input (and called) is associated with the communication client application 110.

The operation of generating a search request for communication client information is shown in Figure 4 by step 409.

The search request can then be forwarded to a suitable communication client application database (such as mentioned previously).

The operation of transmitting the search request from the communication client application to the communication client database is shown in Figure 4 by step 411.

The communication client application database, having received the search request, can be configured to look up the number input to determine whether or not the number input is associated with the communication client application (in other words whether the user terminal being called is equipped with the communication client application also). The communication client application database may be configured to generate a suitable search response comprising a flag (or other suitable indication) indicating whether or not the number input is associated with the communication client application.

The operation of generating a suitable search response is shown in Figure 4 by step 413.

The search response can then be transmitted from the database to the communication client application.

The operation of transmitting the search response from the communication client application database to the communication client application is shown in Figure 4 by step 415.

The communication client application may then be configured to determine whether or not the search response comprises the flag indicating whether the number input (the user terminal associated with the number to be called) has the communication client application installed on it. In other words the communication client application performs a test or check of whether there is a positive response that the number input is on the communication client database.

The operation of determining whether or not the number being called is a user terminal on which the communication client application is also installed is shown in Figure 4 by step 417.

It is understood that in some embodiments that a further local search may be implemented to determine whether the communication client application may be used to place or make the call to the number input. For example in some embodiments the communication client application may search the contact list on the user terminal or the called number cache information to determine whether the number input is a match for a user terminal which is equipped with the communication client application.

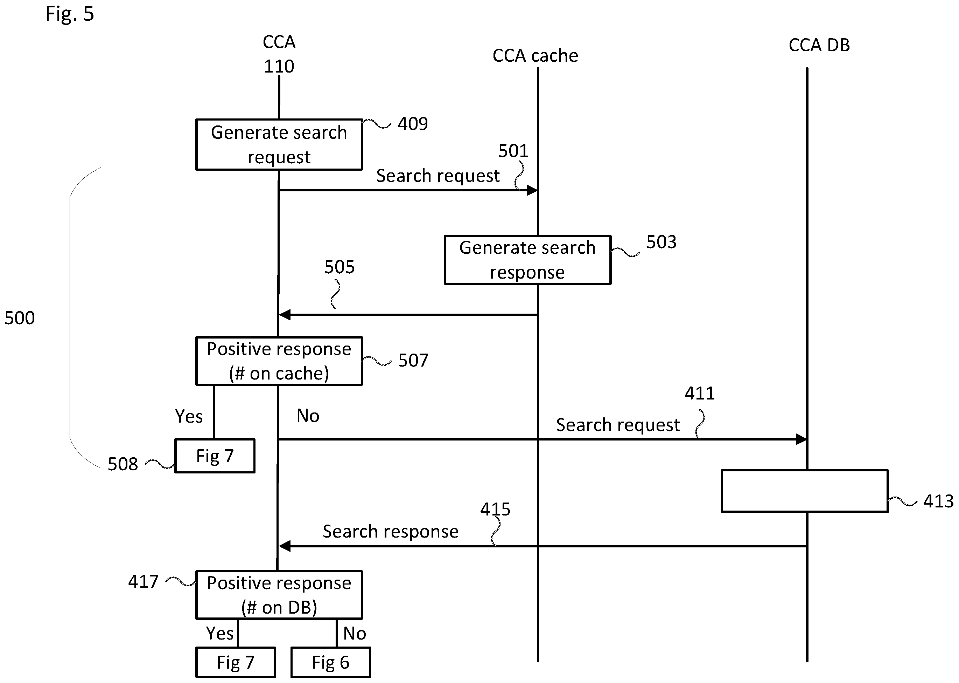

With respect to Figure 5 the further 'local' search is shown by the group 500 of operations inserted into the operations shown in Figure 4 between generating the search request (step 409) and transmitting the search request to the communication client application database (CCA DB) (step 411).

In the example shown in Figure 5 the search request may thus be transmitted to the local search database (for example the communication client cache).

The operation of transmitting the search request from the communication client application to the communication client cache is shown in Figure 5 by step 501.

The communication client cache, which may store information with regards to the last 'n' dialled calls or received calls using the communication client application (where the number 'n' is a suitable number such as 10). Thus the communication client cache may compare the number input within the search request against the cached numbers to determine whether there is a hit or match. Furthermore the communication client cache may be configured to generate a suitable response to the search request. For example the suitable response may comprise a flag indicating whether or not the search has produced a match or hit.

The operation of generating the response is shown in Figure 5 by step 503.

The response may then be transmitted back to the communication client application.

The operation of transmitting the response to the communication client application is shown in Figure 5 by step 505.

The communication client application may then be configured to determine whether or not the search response from the cache comprises the flag (or indicator) indicating whether the number input (the user terminal associated with the number to be called) has the communication client application installed on it. In other words the communication client application performs a test or check of whether there is a positive response that the number input is on the communication client database.

The operation of determining whether the response is positive from the communication client cache is shown in Figure 5 by step 507.

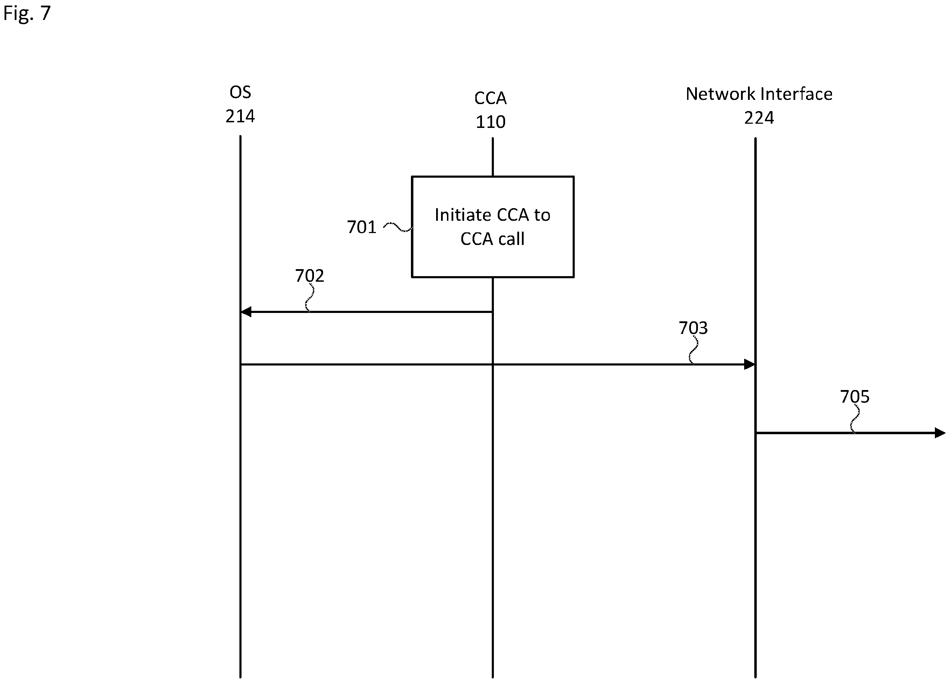

Where the response is positive then the operations can be passed to Figure 7 shown in Figure 5 by step 508.

Where the response is not positive (in other words that the number input is either not on the cache then the search request can be transmitted to the communication client database in a manner shown in Figure 5 by the repeating of the steps shown in Figure 4 of: transmitting the search request from the communication client application to the communication client database (step 411); generating a suitable search response (step 413); transmitting the search response from the communication client application database to the communication client application (step 415); and determining whether or not the number being called is a user terminal on which the communication client application is also installed (step 417).

As discussed herein the communication client application may not be able to make or place a call using the communication client application. For example, as indicated in the examples, where the other user terminal is not equipped with the communication client application and is only equipped with the native communication client or with another communication client. In such embodiments the communication client application may be configured to hand off the call placement to the native or other communication client application.

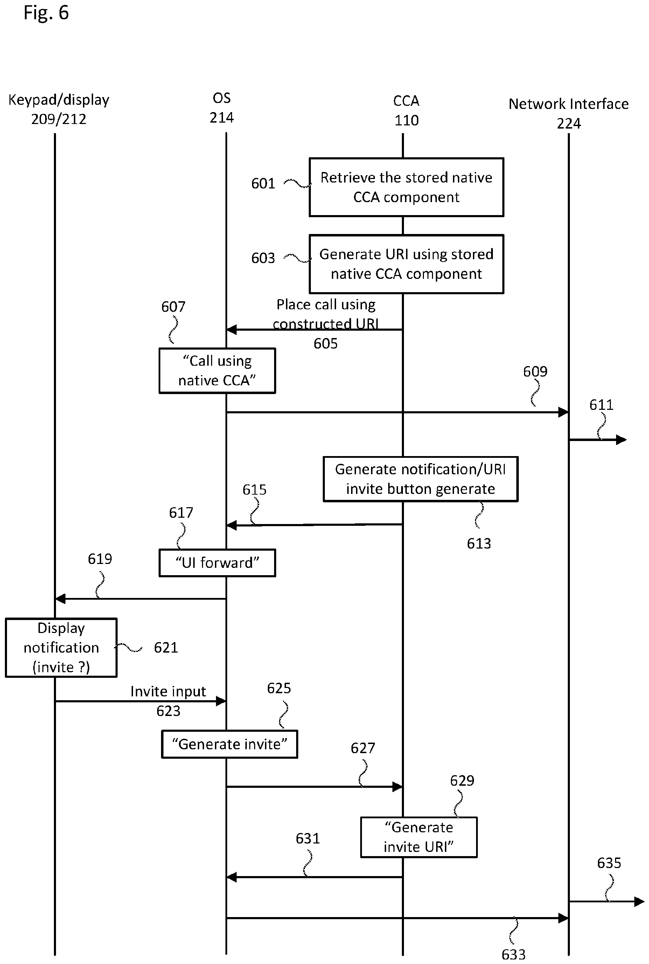

With respect to Figure 6 the 'hand off to the other communication client application is shown. In this example the other communication client application is the native communication client application (in other words the communication client application installed with the operating system and thus installed on all user terminals).

Having determined that the other party is not currently registered to use the communication client application the communication client application 110 may be configured to retrieve the stored native (or other) communication client components. These stored components are the components determined and stored as described previously and shown with respect to Figure 3.

The operation of retrieving the stored communication client components is shown in Figure 6 by step 601.

The communication client application may then be configured to construct a URI using the retrieved native communication client components and the telephone number input.

The operation of constructing a URI using the stored native communication client components is shown in Figure 6 by step 603.

The URL may be transmitted to the OS in order to place the call using the constructed URI

The operation of transmitting the constructed URI to the OS 214 is shown in Figure 6 by step 605.

The operating system, using the constructed URI, may then use the native communication client components identified in the URL to place the call.

The operation of initiating a call using the native communication client components indicated in the URI is shown in Figure 6 by step 607.

Furthermore the communication with the network interface in placing the call over the bearer used by the native communication client application (for example a PSTN or GSM cellular communications network) is shown in Figure 6 by steps 609 and 611.

Having placed the call by using a hand off to a native (or other) communication client then in some embodiments the communication client application 110 may be configured to attempt to introduce the called party (indicated by the number input) to the benefits of using the communication client application and then invite the user terminal to install the communication client application so that at a later time the call may be placed using the communication client application 110.

Figure 6 therefore further shows an example invite or communication client application notification operation.

For example the communication client application 110 may be configured to generate a notification (or message or a suitable user interface button) to enable the user of the user terminal to select and to notify and invite the other party to install the communication client application. This operation may for example be performed after the call has been placed and ended.

The operation of generating the notification (message/user interface button) is shown in Figure 6 by step 613.

This notification is transmitted from the communication client application 110 to the OS 214.

The operation of transmitting the notification to the operating system is shown in Figure 6 by step 615.

The OS may then forward the notification or generate a suitable user interface command.

The operation of generating the notification to be displayed is shown in Figure 6 by step 617.

The operation of transmitting the notification to the display 212 is shown in Figure 6 by step 619.

The display 212 is shown as an example user interface output. However it is understood that the notification may be provided to the user by any suitable user interface output. For example the notification may be provided by an audio or voice notification.

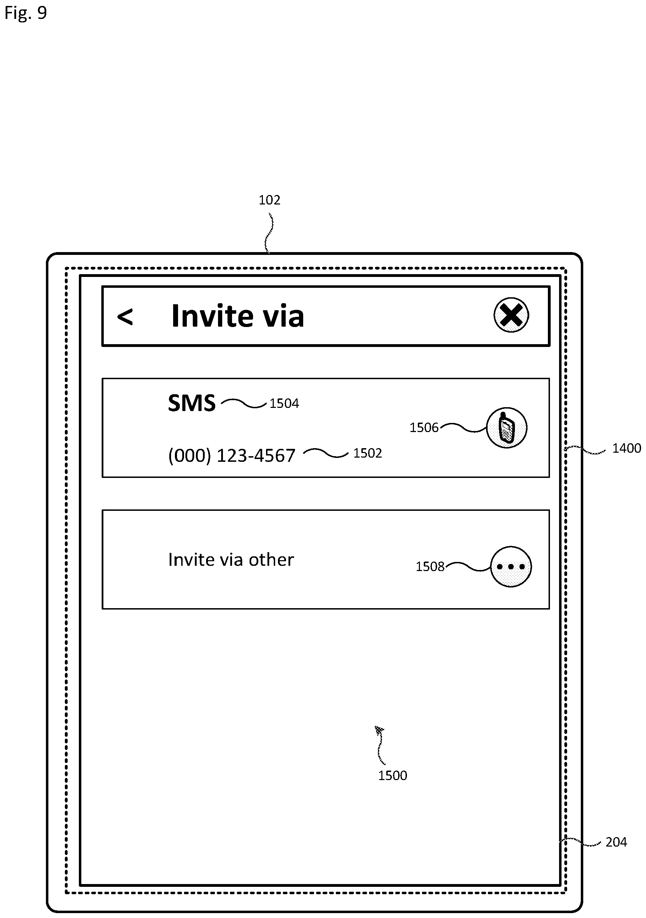

Furthermore Figure 9 shows an example invite message 1500 displayed on the display 212.

Figure 9 shows the client user interface provided by the communication client application 112 displays content in the available area 1400 of the display 212. As depicted in Figure 9, the available area 1400 of the display 212 is the whole of the display. However, it is envisaged that the available area of the display (that is the area available to the communication client application) may constitute only a portion of the display e.g. with the remainder of the display being used by the OS 214 and/or other application(s) executed thereon to display other content.

The invite message 1500 may for example show the bearer information 1504 (in this example SMS) over which the invite is to be sent, the number of the outgoing call 1502, the UI interaction element 1506 to ok the sending of the invite, and an alternative bearer selector 1508 to select a different bearer to send the invite.

Furthermore the keypad or other user interface input may be used to determine whether or not a user interface input is entered in response to the notification. In some embodiments the notification is a request asking whether the user wishes to invite the called party (indicated by the number input) to install the communication client application and thus communicate over the bearer and communications networks managed by the communication client application 110.

The operation of displaying a notification and determining a user input in response to the notification is shown in Figure 6 by step 621.

Where the user responds to the invite by generating an invite input, such as pressing a key on the keypad to indicate a positive response to the notification, then this keypad response is transmitted to the OS 214.

The transmitting of the invite input (the keypad response) to the OS 214 is shown in figure 6 by step 623.

The operating system may then generate an invite message and select one of the available bearers for informing the other party. The bearer may be any suitable method for communicating communication client application installation invites to the other user terminal. For example the invite bearer may be email, SMS, multimedia message, instant messenger message, chat message etc.

For example the invite message may be combination of text 'Do you want to use this communication client application, I am!' and an URL with the address of the installation files for the communication client application and other information.

The operation of selecting a suitable invite bearer and generating the invite message is shown in Figure 6 by step 625.

The invite message may then be transmitted via the suitable bearer and the network interface to the other party.

The operation of passing of the invite message to the network interface is shown in Figure 6 by step 627.

The operation of passing the invite message to the other user terminal via the network interface is shown in Figure 6 by step 629.

The generation of the invite notification may be performed at any suitable time. For example the notification may be generated and displayed to the user following the end of a call and thus the invite may be passed to the other user terminal as soon as possible after a call to attempt to encourage the other user terminal to install the communication client application.

In some embodiments, for example when it is determined that the other user terminal is also implementing the communication client application, then the call may be placed and controlled using the communication client application 110.

The operation of using the communication client application to make the call is shown in Figure 7. In other words Figure 7 shows the operations where it is determined that the number input is associated with the communication client application and therefore occurs within the communication client database or is found within the communication client application cache such as shown in the operations in Figure 4 and 5.

In this example the communication client application, having determined that the other party (from the number input) is also executing or running a communication client application matching the communication client application 110, is configured to initiate a communication client to communication client call.

The operation of initiating a communication client to communication client call is shown in Figure 7 by step 701.

The communication client application 110 may be configured to generate a suitable URI and pass this URI to the OS.

The operation of passing a suitable URI to the OS is shown in Figure 7 by step 703.

The OS 214, having received the URI may place the call using the network interface. In some embodiments the network interface may then initiate packet based communication with the communication client application on the other user terminal over the communication network (such as the internet network 101, or using an overlay network, or a tunnelling network through the mobile cellular network 103, or a network distinct from the communication system 100).

The operation of placing the call is shown in Figure 7 by step 705.

Furthermore the communication with the network interface and the outputting of the call via the network interface is shown in Figure 7 by step 707.

The client protocol layer 218 of the communication client application may thus be configured to communicate with the operating system 214 and manages the connections over the communication system and enable a VoIP call to be set up and controlled between the communication client applications running of the two user terminals in the call.

The above examples show situations where it is possible to determine prior to placing the call whether the communication client application 110 may be used to make and control the call. However in some situations, for example where the network connections are poor or variable quality, it is understood that a definitive determination may not be possible within a reasonable time. In such situations the positive determination operation (step 417) may return a negative or no output indicating that is not possible to positively identify that the number input is associated with the communication client application and a hand off to a native communication client application performed such as shown in Figure 6.

However it is also appreciated that after performing such a hand off to the native or other communication client that the communication client database may return a response to the search request indicating that the number input is associated with the communication client application. In other words the user terminal identified by the number input is contactable using the communication client application.

In some embodiments the communication client application may be configured to perform additional checks while a call is in progress.

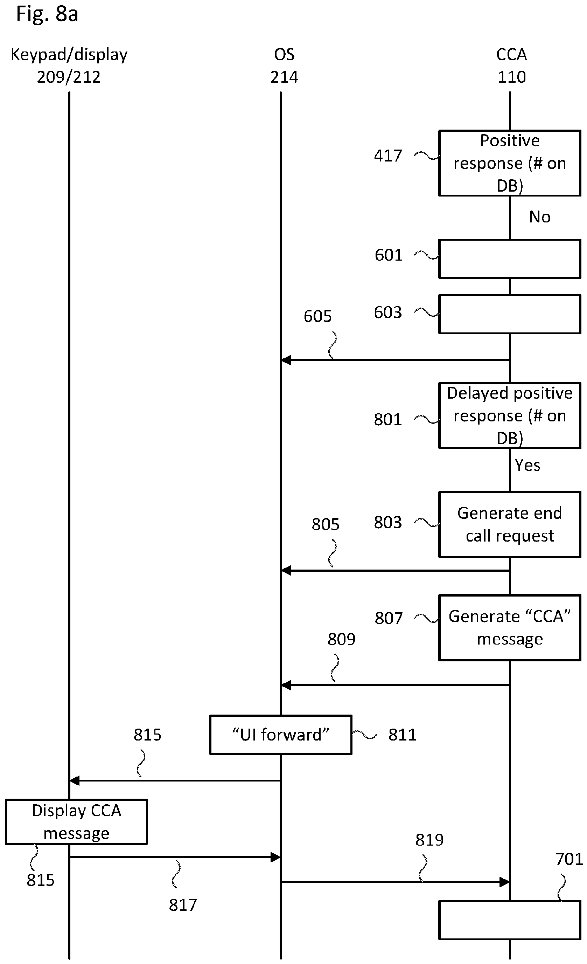

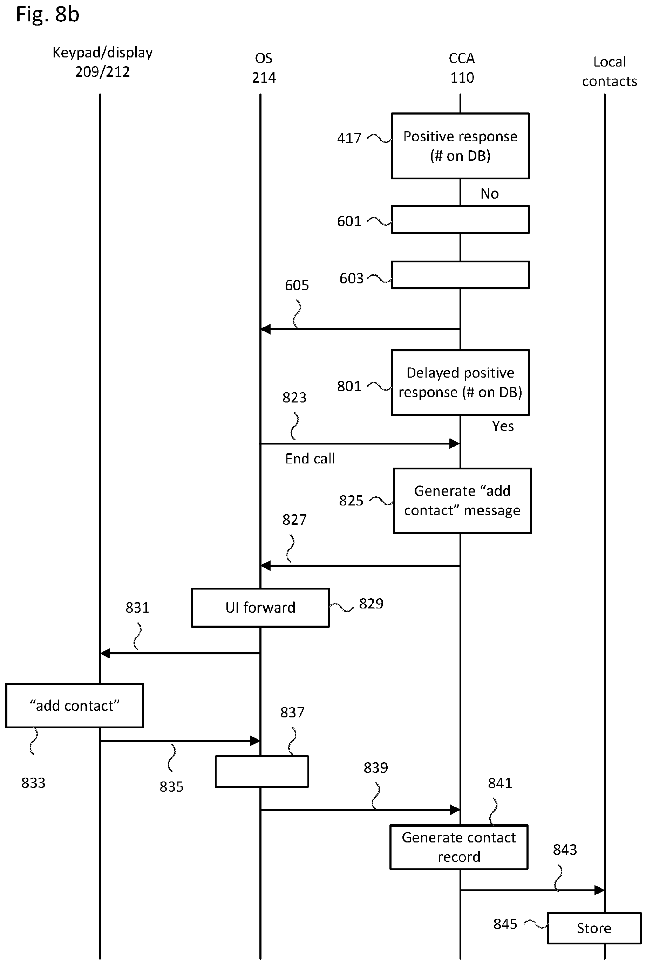

With respect to Figures 8a and 8b flow diagrams are shown where such delayed responses in determining whether the called number is associated with the communication client application occur.

In the example shown in Figure 8a the operations (such as shown in Figures 4, 5 and 6) are shown reflecting an initial 'hand off to the native or other communication client to place the call. Thus the communication client application is configured to: determine whether or not the number being called is a user terminal on which the communication client application is also installed (step 417); retrieve the stored communication client components having determined that the number is not a user terminal on which the communication client application is also installed (step 601); construct a URI using the stored native communication client components (step 603); and transmit the constructed URI to the OS 214 (step 605).

Furthermore Figure 8a shows a further determination of whether or not the number being called is a user terminal on which the communication client application is also installed. This may for example be performed following receiving a response to the search request after the 'hand off' is generated.

The delayed determination of whether or not the number being called is a user terminal on which the communication client application is also installed is shown in Figure 8a by step 801.

In the example shown in Figure 8a the communication client application is configured to interrupt the initial call based on the delayed response indicating that the call is able to connected using the communication client application.

The communication client application 110 may therefore generate an end call request.

The operation of generating the end call request is shown in figure 8a by step 803.

The end call (hang-up) request is then passed from the communication client to the operating system to end the call or to initiate an end call procedure

In the operation of transmitting the end recall request from the communication client application to the OS 214 is shown in Figure 8a by step 805.

The communication client application 110 may then be configured to generate a communication client notification indicating to the user of the user terminal 102 that the call may be connected using the communication client application rather than the current method.

The operation of generating a communication client notification is shown in Figure 8a by step 807.

The communication client application may then transmit the notification message to the OS 214.

The operation of transmitting the notification message from the communication client application to the operating system is shown in Figure 8a by step 809.

The OS 214 can, having received the notification message from the communication client application, be configured to generate a suitable user interface 'notification' message.

The operation of generating a user interface 'notification' message is shown in Figure 8a by step 811.

The user interface 'notification' message may then be transmitted to the display to be output to the user.

The operation of transmitting the user interface 'notification' message to the display is shown in Figure 8a by step 813.

The display can then display the 'notification' message. The 'notification' can in some embodiments be a simple message informing the user that the number being called may be re-started using the communication client application. Furthermore in some embodiments the 'notification' can request a response such as asking whether to reconnect or switch over to the communication client application to manage the call. Thus in some embodiments the keypad is configured to receive an input in response to the notification.

The operation of displaying the 'notification' message and/or receiving an input is shown in Figure 8a by step 815.

This input can be passed from the keypad to the OS. This example shows the use of the display and keypad as output and input user interface components. However any suitable user input component may be used to display the notification message and respond to a user input.

The operation of transmitting the input from the keypad to the OS is shown in Figure 8a by step 817.

The OS may receive the input and forward the input to the communication client application.

The operation of forwarding the input from the operating system to the communication client application is shown in Figure 8a by step 819.

The communication client application, having determined that the input indicates that the user wishes to use the communication client application to contact the other user terminal using the communication client application, may be configured to initiate a communication client to communication client placed call such as described previously.

The operation of initiating the communication client to communication client placed call is shown in Figure 8a by the step 701.

In the example shown above the current call is ended before the notification is made and the communication client placed call started. It is understood that in some embodiments the communication client application may be configured to perform a hand over procedure wherein the notification is made (and responded to) before the current call is ended and the communication client application placed call is started. Thus for example the user may then choose whether to switch between the native or other communication client placed call and the communication client application placed call without losing the current placed call.

In the example shown in Figure 8b the communication client application is configured to not interrupt the initial call based on the delayed response indicating that the call is able to connected using the communication client application. In this example the user is notified only after the call ends.

Thus the example shown in Figure 8b shows the same operations (such as shown in Figures 4, 5 and 6) are shown reflecting an initial 'hand off' to the native or other communication client to place the call. Thus the communication client application is configured to: determine whether or not the number being called is a user terminal on which the communication client application is also installed (step 417); retrieve the stored communication client components having determined that the number is not a user terminal on which the communication client application is also installed (step 601); construct a URI using the stored native communication client components (step 603); and transmit the constructed URI to the OS 214 (step 605).

Furthermore Figure 8b shows a further determination of whether or not the number being called is a user terminal on which the communication client application is also installed. This may for example be performed following receiving a response to the search request after the 'hand off' is generated.

The delayed determination of whether or not the number being called is a user terminal on which the communication client application is also installed is shown in Figure 8b by step 801.

In the example shown in Figure 8b the communication client application further receives an end call notification.

The operation of receiving an end call notification from the operating system 214 is shown in Figure 8b by step 823.

The communication client application in this embodiment may then be configured to generate a suitable 'add contact?' request to ask the user whether or not to add the contact to the users contact address book and furthermore flag or indicate that the contact is contactable using the communication client application.

The communication client application 110 may then be configured to generate a 'add contact?' notification or message indicating to the user of the user terminal 102 that the contact may be connected using the communication client application rather than the current method.

The operation of generating a 'add contact?' notification is shown in Figure 8b by step 825.

The communication client application may then transmit the 'add contact?' notification message to the OS 214.

The operation of transmitting the 'add contact?' notification message from the communication client application to the operating system is shown in Figure 8b by step 827.

The OS 214 can, having received the 'add contact?' notification message from the communication client application, be configured to generate a suitable user interface 'add contact?' message.

The operation of generating a user interface 'add contact' notification message is shown in Figure 8b by step 829.

The user interface 'add contact' notification message may then be transmitted to the display to be output to the user.

The operation of transmitting the user interface 'add contact?' notification message to the display is shown in Figure 8b by step 831.

The display can then display the 'add contact?' notification message. Furthermore in some embodiments the 'notification' can request a response. Thus in some embodiments the keypad is configured to receive an 'add contact' input in response to the notification.

The operation of displaying the 'add contact?' notification message and/or receiving an 'add contact' input is shown in Figure 8b by step 833.

This 'add contact?' input can be passed from the keypad to the OS. This example shows the use of the display and keypad as output and input user interface components. However any suitable user input component may be used to display the notification message and respond to a user input.

The operation of transmitting the ' add contact' input from the keypad to the OS is shown in Figure 8b by step 835.

The OS may receive the 'add contact' input, generate a response, and forward the response to the communication client application.

The operation of generating a response to the input is shown in Figure 8b by step 837.

The operation of transmitting the response to the 'add contact' input from the operating system to the communication client application is shown in Figure 8b by step 839.

The communication client application, having determined that the 'add contact' input indicates that the user wishes to add the number to the contact list, may be configured to generated a contact record comprising the called number and an indicator or flag indicating that the number is able to be contacted using the communication client application.

The operation of generating the contact record is shown in Figure 8b by step 841.

This contact record may then be transmitted to the local contact address book (and in some embodiments a backup of the local contact address book stored remotely).

The operation of transmitting of the contact record is shown in Figure 8b by step 843.

The local contact address book may then store this record.

The operation of storing the record in the local contact address book is shown in Figure 8b by step 845.

Generally, any of the functions described herein can be implemented using software, firmware, hardware (e.g., fixed logic circuitry), or a combination of these implementations. The terms "controller", "functionality", "component", and "application" as used herein generally represent software, firmware, hardware, or a combination thereof. In the case of a software implementation, the controller, functionality, component or application represents program code that performs specified tasks when executed on a processor (e.g. CPU or CPUs). The program code can be stored in one or more computer readable memory devices. The features of the techniques described below are platform-independent, meaning that the techniques may be implemented on a variety of commercial computing platforms having a variety of processors.

For example, the user terminals may also include an entity (e.g. software) that causes hardware of the user terminals to perform operations, e.g., processors functional blocks, and so on. For example, the user terminals may include a computer-readable medium that may be configured to maintain instructions that cause the user terminals, and more particularly the operating system and associated hardware of the user terminals to perform operations. Thus, the instructions function to configure the operating system and associated hardware to perform the operations and in this way result in transformation of the operating system and associated hardware to perform functions. The instructions may be provided by the computer-readable medium to the user terminals through a variety of different configurations.

One such configuration of a computer-readable medium is signal bearing medium and thus is configured to transmit the instructions (e.g. as a carrier wave) to the computing device, such as via a network. The computer-readable medium may also be configured as a computer-readable storage medium and thus is not a signal bearing medium. Examples of a computer-readable storage medium include a random-access memory (RAM), read-only memory (ROM), an optical disc, flash memory, hard disk memory, and other memory devices that may use magnetic, optical, and other techniques to store instructions and other data.

According to a first aspect there is provided a user terminal associated with a first user, the user terminal comprising a communication client application for managing communications with at least one further user terminal over a first network, the communication client application being configured to: determine information associated with at least one further communication client application installed on the user terminal by generating a dummy call URI, passing the dummy call URI to a user terminal operating system and receiving from the user terminal operating system native communication client component information identifying the at least one further communication client application, the at least one further communication client application for managing communications with the at least one further user over a second network; determine with respect to at least one outgoing call whether a further user terminal at the call end point comprises the communication client application; and manage the placement of the call based on the determination of whether the further user terminal at the call end point comprises the communication client application, such that the communication client application is configured to manage the placement of the call using the communication client application over the first network when the further user terminal at the call end point comprises the communication client application and hand off the placement of the call to the identified at least one further communication client application otherwise by generating a call URI comprising the native communication client component information identifying the at least one further communication client application; wherein the communication client application is configured to determine with respect to the at least one outgoing call whether the further user terminal at the call end point comprises the communication client application by: receiving an outgoing call event notification, the outgoing call event notification comprising an identifier identifying a user of the at least one further user terminal; generating a search request comprising the identifier for a communication client application database; and receiving a response to the search request determining whether the at least one further user terminal at the call end point comprises the communication client application.

In such a manner the management of call placing may be performed by a communication client application for communications over a first network (such as a skype network) when it is determined that the user terminal at the call end point is also equipped to handle such communications and hand off the call placement to a further communication client application for communication over a second or further network (such as cellular communications network) otherwise. Such embodiments permit efficient call handling and provide a more flexible method of call management, placement and handling.

The communication client application may be further configured to generate an invite for the at least one further user terminal to install the communication client application after the hand off the placement of the call to the at least one further communication client application.

The communication client application may be further configured to generate a user interface element for controlling the generation of the invite for the at least one further user.

The communication client application database may comprise a communication client application server and/or a contact list cache.

The communication client application may be configured to further determine with respect to the at least one outgoing call whether the further user terminal at the call end point comprises the communication client application following the placement of the call.

The communication client application may be configured to: generate an end call request to terminate the call handed off to the at least one further communication client application; and manage the placement of the call using the communication client application over the first network when further determination determines that the further user terminal at the call end point comprises the communication client application and when the earlier determination determines otherwise.

The communication client application may be configured to: generate a contact record comprising an identifier associating the further user terminal at the call end point with the communication client application; manage the storage of the contact record on the user terminal.

The user terminal may be one of: an Internet-enabled mobile telephone; a handheld game console; a personal digital assistant (PDA); a tablet computer; a laptop computer.

According to a second aspect there is provided a method for managing communications between user terminals over a first network, the method comprising: determining information associated with at least one further communication client application installed on the user terminal for managing communications with the at least one further user over a second network by generating a dummy call URI, passing the dummy call URI to a user terminal operating system and receiving from the user terminal operating system native communication client component information identifying the at least one further communication client application; determining with respect to at least one outgoing call whether a user terminal at the call end point comprises the communication client application; and managing and performing the placement of the call based on the determination of whether the user terminal at the call end point comprises the communication client application, such that the communication client application manages and performs the placement of the call using the communication client application over the first network when the further user terminal at the call end point comprises the communication client application and hands off the placement of the call to the to the at least one further communication client application otherwise by generating a call URI comprising the native communication client component information identifying the at least one further communication client application; wherein the communication client application is configured to determine with respect to the at least one outgoing call whether the further user terminal at the call end point comprises the communication client application by: receiving an outgoing call event notification, the outgoing call event notification comprising an identifier identifying a user of the at least one further user terminal; generating a search request comprising the identifier for a communication client application database; and receiving a response to the search request determining whether the at least one further user terminal at the call end point comprises the communication client application.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

## Claims

1. A user terminal (102) associated with a first user, the user terminal (102) comprising a communication client application (110) for managing and performing communications with at least one further user terminal over a first network, the communication client application (110) being configured to:
determine information associated with at least one further communication client application (230) installed on the user terminal (102) by generating a dummy call URI, passing the dummy call URI to a user terminal operating system (214) and receiving from the user terminal operating system (214) native communication client component information identifying the at least one further communication client application (230), the at least one further communication client application (230) being for managing and performing communications with the at least one further user terminal over a second network;
determine with respect to at least one outgoing call whether a further user terminal among the at least one further user terminal at the call end point of the at least one outgoing call comprises the communication client application; and
manage and perform the placement of the call based on the determination of whether the further user terminal at the call end point comprises the communication client application, such that the communication client application (110) is configured to manage and perform the placement of the call using the communication client application (110) over the first network when the further user terminal at the call end point comprises the communication client application and hand off the placement of the call to the identified at least one further communication client application (230) otherwise by generating a call URI comprising the native communication client component information identifying the at least one further communication client application (230);
wherein the communication client application (110) is configured to determine with respect to the at least one outgoing call whether the further user terminal at the call end point comprises the communication client application (110) by:
receiving an outgoing call event notification, the outgoing call event notification comprising an identifier identifying a user of the at least one further user terminal;
generating a search request comprising the identifier for a communication client application database; and
receiving a response to the search request determining whether the at least one further user terminal at the call end point comprises the communication client application.

2. The user terminal according to any previous claim, wherein the communication client application (110) is further configured to generate an invite for the at least one further user terminal to install the communication client application after the hand off the placement of the call to the at least one further communication client application.

3. The user terminal according to claim 2, wherein the communication client application (110) is further configured to generate a user interface element for controlling the generation of the invite for the at least one further user.

4. The user terminal according to claim 1, wherein the communication client application database comprises a communication client application server (120) and/or a contact list cache.

5. The user terminal according to any previous claim, wherein the communication client application (110) is configured to further determine with respect to the at least one outgoing call whether the further user terminal at the call end point comprises the communication client application following the placement of the call.

6. A method performed by a communication client application of a user terminal for managing and performing communications with at least one further user terminal over a first network, the method comprising:
determining information associated with at least one further communication client application installed on the user terminal for managing and performing communications with the at least one further user over a second network by generating a dummy call URI, passing the dummy call URI to a user terminal operating system and receiving from the user terminal operating system native communication client component information identifying the at least one further communication client application;
determining with respect to at least one outgoing call whether a further user terminal among the at least one further user terminal at the call end point of the at least one outgoing call comprises the communication client application; and
managing and performing the placement of the call based on the determination of whether the further user terminal at the call end point comprises the communication client application, such that the communication client application manages and performs the placement of the call using the communication client application over the first network when the further user terminal at the call end point comprises the communication client application and hands off the placement of the call to the identified at least one further communication client application otherwise by generating a call URI comprising the native communication client component information identifying the at least one further communication client application;
wherein the communication client application determines with respect to the at least one outgoing call whether the further user terminal at the call end point comprises the communication client application by:
receiving an outgoing call event notification, the outgoing call event notification comprising an identifier identifying a user of the at least one further user terminal;
generating a search request comprising the identifier for a communication client application database; and
receiving a response to the search request determining whether the at least one further user terminal at the call end point comprises the communication client application.

7. The user terminal (102) according to claim 5, wherein the communication client application (110) is configured to:
generate an end call request to terminate the call handed off to the at least one further communication client application (230); and
manage and perform the placement of the call using the communication client application (110) over the first network when further determination determines that the further user terminal at the call end point comprises the communication client application and when the earlier determination determines otherwise.

8. The user terminal (102) according to claim 5, wherein the communication client application (110) is configured to:
generate an contact record comprising an identifier associating the further user terminal at the call end point with the communication client application;
manage the storage of the contact record on the user terminal.

9. The user terminal (102) according to any of claims 1 to 5 and 7 to 8, wherein the user terminal (102) is one of:
an Internet-enabled mobile telephone;
a handheld game console;
a personal digital assistant (PDA);
a tablet computer;
a laptop computer.

10. A computer program product comprising a communication client application (110) configured, when executed on a user terminal (102), to perform the steps of the method of any of claims 6 to 9.

## Patentansprüche

1. Benutzerendgerät (102), das mit einem ersten Benutzer assoziiert ist, wobei das Benutzerendgerät (102) eine Kommunikations-Client-Anwendung (110) zum Verwalten und Durchführen von Kommunikationen mit zumindest einem weiteren Benutzerendgerät über ein erstes Netzwerk umfasst, wobei die Kommunikations-Client-Anwendung (110) konfiguriert ist, Folgendes zu tun:
Ermitteln von Information, die mit zumindest einer weiteren Kommunikations-Client-Anwendung (230) assoziiert ist, die auf dem Benutzerendgerät (102) installiert ist, durch Generieren eines Dummy-Anruf-URI, Weiterleiten des Dummy-Anruf-URI an ein Benutzerendgerät-Betriebssystem (214) und Empfangen ab dem Benutzerendgerät-Betriebssystem (214) systemeigener Kommunikations-Client-Komponenteninformation, welche die zumindest eine weitere Kommunikations-Client-Anwendung (230) identifiziert, wobei die zumindest eine weitere Kommunikations-Client-Anwendung (230) zur Verwaltung und Durchführung von Kommunikationen mit dem zumindest einem weiteren Benutzerendgerät über ein zweites Netzwerk dient;
Ermitteln mit Bezug auf zumindest eines ausgehenden Anrufs, ob ein weiteres Benutzerendgerät unter dem zumindest einen weiteren Benutzerendgerät am Anrufendpunkt des zumindest einen ausgehenden Anrufs die Kommunikations-Client-Anwendung umfasst; und
Verwalten und Durchführen der Platzierung des Anrufs auf Basis der Ermittlung, ob das weitere Benutzerendgerät am Anrufendpunkt die Kommunikations-Client-Anwendung umfasst, derartig, dass die Kommunikations-Client-Anwendung (110) konfiguriert ist, die Platzierung des Anrufs unter Verwendung der Kommunikations-Client-Anwendung (110) über das erste Netzwerk zu verwalten und durchzuführen, wenn das weitere Benutzerendgerät am Anrufendpunkt die Kommunikations-Client-Anwendung umfasst und Abgeben der Platzierung des Anrufs an die identifizierte zumindest eine weitere Kommunikations-Client-Anwendung (230) anderweitig durch Generieren eines Anruf-URI, der die systemeigene Kommunikations-Client-Komponenteninformation umfasst, welche die zumindest eine weitere Kommunikations-Client-Anwendung (230) identifiziert;
wobei die Kommunikations-Client-Anwendung (110) konfiguriert ist, mit Bezug auf den zumindest einen ausgehenden Anruf zu ermitteln, ob das weitere Benutzerendgerät am Anrufendpunkt die Kommunikations-Client-Anwendung (110) umfasst durch:
Empfangen einer ausgehenden Anruf-Ereignisbenachrichtigung, wobei die ausgehende Anruf-Ereignisbenachrichtigung einen Bezeichner umfasst, der einen Benutzer des zumindest einen weiteren Benutzerendgeräts identifiziert;
Generieren einer Suchanforderung, die den Bezeichner für eine Kommunikations-Client-Anwendungsdatenbank umfasst; und
Empfangen einer Antwort auf die Suchanforderung, die bestimmt, ob das zumindest eine weitere Benutzerendgerät am Anrufendpunkt die Kommunikations-Client-Anwendung umfasst.

2. Benutzerendgerät nach einem vorhergehenden Anspruch, wobei die Kommunikations-Client-Anwendung (110) ferner konfiguriert ist, eine Einladung für das zumindest eine weitere Benutzerendgerät zu generieren, um die Kommunikations-Client-Anwendung nach der Abgabe der Platzierung des Anrufs auf die zumindest eine weitere Kommunikations-Client-Anwendung zu installieren.

3. Benutzerendgerät nach Anspruch 2, wobei die Kommunikations-Client-Anwendung (110) ferner konfiguriert ist, ein Benutzerschnittstellenelement zum Steuern der Generierung der Einladung für den zumindest einen weiteren Benutzer zu generieren.

4. Benutzerendgerät nach Anspruch 1, wobei die Kommunikations-Client-Anwendungsdatenbank einen Kommunikations-Client-Anwendungsserver (120) und/oder einen Kontaktlisten-Cache umfasst.

5. Benutzerendgerät nach einem vorhergehenden Anspruch, wobei die Kommunikations-Client-Anwendung (110) konfiguriert ist, ferner mit Bezug auf den zumindest einen ausgehenden Anruf zu ermitteln, ob das weitere Benutzerendgerät am Anrufendpunkt anschließend an die Platzierung des Anrufs die Kommunikations-Client-Anwendung umfasst.

6. Verfahren, das von einer Kommunikations-Client-Anwendung eines Benutzerendgeräts zur Verwaltung und Durchführung von Kommunikationen mit zumindest einem weiteren Benutzerendgerät über ein erstes Netzwerk durchgeführt wird, wobei das Verfahren umfasst:
Ermitteln von Information, die mit zumindest einer weiteren Kommunikations-Client-Anwendung assoziiert ist, die auf dem Benutzerendgerät installiert ist, zur Verwaltung und Durchführung von Kommunikationen mit dem zumindest einem weiteren Benutzer über ein zweites Netzwerk durch Generieren eines Dummy-Anruf-URI, Weiterleiten des Dummy-Anruf-URI an ein Benutzerendgerät-Betriebssystem und Empfangen vom Benutzerendgerät-Betriebssystem systemeigener Kommunikations-Client-Komponenteninformation, welche die zumindest eine weitere Kommunikations-Client-Anwendung identifiziert;
Ermitteln mit Bezug auf zumindest eines ausgehenden Anrufs, ob ein weiteres Benutzerendgerät unter dem zumindest einen weiteren Benutzerendgerät am Anrufendpunkt des zumindest einen ausgehenden Anrufs die Kommunikations-Client-Anwendung umfasst; und
Verwalten und Durchführen der Platzierung des Anrufs auf Basis der Ermittlung, ob das weitere Benutzerendgerät am Anrufendpunkt die Kommunikations-Client-Anwendung umfasst, derartig, dass die Kommunikations-Client-Anwendung die Platzierung des Anrufs unter Verwendung der Kommunikations-Client-Anwendung über das erste Netzwerk verwaltet und durchführt, wenn das weitere Benutzerendgerät am Anrufendpunkt die Kommunikations-Client-Anwendung umfasst und die Platzierung des Anrufs an die identifizierte zumindest eine weitere Kommunikations-Client-Anwendung abgibt anderweitig durch Generieren eines Anruf-URI, der die systemeigene Kommunikations-Client-Komponenteninformation umfasst, welche die zumindest eine weitere Kommunikations-Client-Anwendung identifiziert;
wobei die Kommunikations-Client-Anwendung mit Bezug auf den zumindest einen ausgehenden Anruf ermittelt, ob das weitere Benutzerendgerät am Anrufendpunkt die Kommunikations-Client-Anwendung umfasst durch:
Empfangen einer ausgehenden Anruf-Ereignisbenachrichtigung, wobei die ausgehende Anruf-Ereignisbenachrichtigung einen Bezeichner umfasst, der einen Benutzer des zumindest einen weiteren Benutzerendgeräts identifiziert;
Generieren einer Suchanforderung, die den Bezeichner für eine Kommunikations-Client-Anwendungsdatenbank umfasst; und
Empfangen einer Antwort auf die Suchanforderung, die bestimmt, ob das zumindest eine weitere Benutzerendgerät am Anrufendpunkt die Kommunikations-Client-Anwendung umfasst.

7. Benutzerendgerät (102) nach Anspruch 5, wobei die Kommunikations-Client-Anwendung (110) konfiguriert ist, Folgendes zu tun:
Generieren einer Aufforderung für Anruf beenden, um den Anruf zu beenden, der an die zumindest eine weitere Kommunikations-Client-Anwendung (230) abgegeben wurde; und
Verwalten und Durchführen der Platzierung des Anrufs unter Verwendung der Kommunikations-Client-Anwendung (110) über das erste Netzwerk, wenn weitere Ermittlung ermittel, dass das weitere Benutzerendgerät am Anrufendpunkt die Kommunikations-Client-Anwendung umfasst und wenn die frühere Ermittlung anderweitig ermittelt.

8. Benutzerendgerät (102) nach Anspruch 5, wobei die Kommunikations-Client-Anwendung (110) konfiguriert ist, Folgendes zu tun:
Generieren einer Kontaktaufzeichnung, die einen Bezeichner umfasst, der das weitere Benutzerendgerät am Anrufendpunkt mit der Kommunikations-Client-Anwendung assoziiert;
verwalten der Speicherung der Kontaktaufzeichnung auf dem Benutzerendgerät.

9. Benutzerendgerät (102) nach einem der Ansprüche 1 bis 5 und 7 bis 8, wobei das Benutzerendgerät (102) eins von Folgenden ist:
Einem internetfähigen Mobiltelefon;
einer Handspielkonsole;
einem persönlichen digitalen Assistent (PDA);
einem Tablet-Computer;
einem Laptop-Computer.

10. Computerprogrammprodukt, das eine Kommunikations-Client-Anwendung (110) umfasst, die konfiguriert ist, wenn auf einem Benutzerendgerät (102) ausgeführt, die Schritte des Verfahrens nach einem der Ansprüche 6 bis 9 durchzuführen.

## Revendications

1. Terminal utilisateur (102) associé à un premier utilisateur, le terminal utilisateur (102) comprenant une application Communication client (110) pour gérer et effectuer des communications avec au moins un autre terminal utilisateur sur un premier réseau, l'application Communication client (110) étant configurée pour :
déterminer les informations associées avec au moins une autre application Communication client (230) installée à hauteur du terminal utilisateur (102), en générant un appel fictif URI, en passant l'appel fictif URI à un système d'exploitation (214) du terminal utilisateur et en recevant du système d'exploitation (214) du terminal utilisateur des informations sur les composantes de communication client natives identifiant la au moins une autre application Communication client (230), la au moins une autre application Communication client (230) servant à gérer et à effectuer des communications avec le au moins un autre terminal utilisateur sur un deuxième réseau ;
déterminer, par rapport à au moins un appel sortant, si un autre terminal utilisateur parmi le au moins un autre terminal utilisateur, à hauteur du point de fin d'appel du au moins un appel sortant, comporte l'application Communication client ; et
gérer et assurer la réalisation de l'appel d'après la détermination à savoir si l'autre terminal utilisateur, à hauteur du point de fin d'appel comporte l'application Communication client, de sorte que l'application Communication client (110) est configurée pour gérer et assurer la réalisation de l'appel en utilisant l'application Communication client (110) sur le premier réseau , quand l'autre terminal utilisateur à hauteur du point de fin d'appel comporte l'application Communication client et transfert la réalisation de l'appel à la au moins une autre application Communication client (230) identifiée, autrement en générant un appel URI comportant les informations sur les composantes de communication client natives identifiant la au moins une autre application Communication client (230) ;
dans lequel l'application Communication client (110) est configurée pour déterminer, par rapport à le au moins un appel sortant, si l'autre terminal utilisateur à hauteur du point de fin d'appel comporte l'application Communication client (110) en :
recevant une notification d'événement d'appel sortant, la notification d'événement d'appel sortant comportant un identifiant qui identifie un utilisateur du au moins un autre terminal utilisateur ;
générant une demande de recherche comportant l'identifiant pour une base de données de l'application Communication client ; et
recevant une réponse à la demande de recherche déterminant si le au moins un autre terminal utilisateur à hauteur du point de fin d'appel comporte l'application Communication client.

2. Terminal utilisateur selon l'une quelconque des revendications précédentes, dans lequel l'application Communication client (110) est en outre configurée pour générer une invite à destination du au moins un autre terminal utilisateur d'installer l'application Communication client suite au transfert de la réalisation de l'appel à la au moins une autre application client.

3. Terminal utilisateur selon la revendication 2, dans lequel l'application Communication client (110) est en outre configurée pour générer un élément d'interface utilisateur pour contrôler la génération de l'invite à destination du au moins un autre utilisateur.

4. Terminal utilisateur selon la revendication 1, dans lequel la base de données de l'application Communication client comprend un serveur d'application Communication client (120) et/ou un cache de liste de contact.

5. Terminal utilisateur selon l'une quelconque des revendications précédentes, dans lequel l'application Communication client (110) est configurée pour en outre déterminer, par rapport à le au moins un appel sortant, si l'autre terminal utilisateur, à hauteur du point de fin d'appel, comporte l'application Communication client suite à la réalisation de l'appel.

6. Procédé effectué par une application Communication client d'un terminal utilisateur pour gérer et effectuer des communications avec au moins un autre terminal utilisateur sur un premier réseau, le procédé consistant à :
déterminer les informations associées à au moins une application Communication client installée sur le terminal utilisateur pour générer et effectuer des communications avec le au moins un autre utilisateur sur un deuxième réseau en générant un appel fictif URI, en passant l'appel fictif URI à un système d'exploitation du terminal utilisateur et en recevant du système d'exploitation du terminal utilisateur des informations sur les composantes de communication client natives identifiant la au moins une autre application Communication client ;
déterminer, par rapport à au moins un appel sortant, si un autre terminal utilisateur parmi le au moins un autre terminal utilisateur, à hauteur du point de fin d'appel du au moins un appel sortant, comporte l'application Communication client ; et
gérer et assurer la réalisation de l'appel d'après la détermination à savoir si l'autre terminal utilisateur, à hauteur du point de fin d'appel, comporte l'application Communication client, de sorte que l'application Communication client gère et assure la réalisation de l'appel en utilisant l'application Communication client sur le premier réseau , quand l'autre terminal utilisateur à hauteur du point de fin d'appel comporte l'application Communication client et transfert la réalisation de l'appel à la au moins une autre application Communication client identifiée, autrement en générant un appel URI comportant les informations sur les composantes de communication client natives identifiant la au moins une autre application Communication client ;
dans lequel l'application Communication client détermine, par rapport à le au moins un appel sortant, si l'autre terminal utilisateur à hauteur du point de fin d'appel comporte l'application Communication client en :
recevant une notification d'événement d'appel sortant, la notification d'événement d'appel sortant comportant un identifiant qui identifie un utilisateur du au moins un autre terminal utilisateur ;
générant une demande de recherche comportant l'identifiant pour une base de données de l'application Communication client ; et
recevant une réponse à la demande de recherche déterminant si le au moins un autre terminal utilisateur à hauteur du point de fin d'appel comporte l'application Communication client.

7. Terminal utilisateur (102) selon la revendication 5, dans lequel l'application Communication client (110) est configurée pour :
générer une demande de terminaison d'appel pour terminer l'appel transféré à la au moins une autre application Communication client (230) ; et
gérer et assurer la réalisation de l'appel en utilisant l'application Communication client (110) sur le premier réseau quand en outre une autre détermination détermine que l'autre terminal utilisateur au point de fin d'appel comprend l'application Communication client et quand la détermination antérieure en détermine autrement.

8. Terminal utilisateur (102) selon la revendication 5, dans lequel l'application Communication client (110) est configurée pour :
générer un registre de contact comprenant un identifiant associant l'autre terminal utilisateur à hauteur du point de fin d'appel à l'application Communication client ;
gérer le stockage du registre de contact sur le terminal utilisateur.

9. terminal utilisateur (102) selon l'une quelconque des revendications 1 à 5 et selon l'une quelconque des revendications 7 à 8, dans lequel le terminal utilisateur (102) est soit :
un téléphone mobile compatible Internet ;
une console de jeux portable ;
un assistant numérique personnel (PDA) ;
une tablette ;
un ordinateur portable.

10. Produit de programme d'ordinateur comprenant une application Communication client (110) configurée pour, quand exécutée sur un terminal utilisateur (102), effectuer les étapes du procédé selon l'une quelconque des revendications 6 à 9.
